# EUROPÄISCHE PATENTSCHRIFT

(11) **EP 4 137 722 B1**
(45) Veröffentlichungstag und Bekanntmachung des Hinweises auf die Patenterteilung: **01.11.2023**
(21) Anmeldenummer: 21191912.1
(22) Anmeldetag: 18.08.2021
(51) Int. Cl.: F16K 3/08, F16K 27/04, F16K 31/53, F16K 31/04

(54) **VENTILKARTUSCHE**
VALVE CARTRIDGE
CARTOUCHE DE VANNE

(43) Veröffentlichungstag der Anmeldung: 22.02.2023
(73) Patentinhaber: Flühs Drehtechnik GmbH, 58515 Lüdenscheid (DE)
(72) Erfinder: Klawin, Tim-Florian, 58553 Halver (DE); Lange, Lutz, 58511 Lüdenscheid (DE)
(74) Vertreter: Patentanwälte Dörner & Kötter PartG mbB

(56) Entgegenhaltungen:
- EP-A2- 0 343 312
- WO-A1-2020/170193
- US-A1- 2021 199 213

## Beschreibung

Die Erfindung betrifft eine Ventilkartusche, mit einem Kopfstück, das von einer Spindel mittig durchsetzt ist, durch die ein Ventil betätigbar ist, das an einem durch eine Innendurchmesserreduzierung des Kopfstücks gebildeten Absatz anliegt, wobei die Spindel über wenigstens einen O-Ring gegenüber dem Kopfstück angedichtet ist.

Mit Hilfe von Ventiloberteilen oder auch Ventilkartuschen wird der Austritt von Medien aus Armaturen gesteuert. Für diesen Zweck wird das Ventiloberteil mittels seines Kopfstücks in das Gehäuse einer Armatur eingebracht. Die Spindel wird mit einem Hebel verbunden, über den sie drehbar ist. EP0343312 offenbart eine Ventilkartusche gemäß dem Oberbegriff des Anspruchs 1. Bei anderen bekannten Ventiloberteilen (vgl. DE 32 07 895 C2, DE 36 38 180 C2, DE 87 15 044 U1) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander.

Bei Ventilkartuschen der vorliegend betrachteten Art weist das Kopfstück innen eine Durchmesserreduzierung auf, wodurch ein Absatz zu Anlage des Ventils gebildet ist. Aufgrund der Innendurchmesserreduzierung kann das Kopfstück bei der Montage des Ventiloberteils nur von der oberen, der Spindel zugewandten Seite bestückt werden. Solche Ventilkartuschen werden auch als "Toplader" bezeichnet. Bei diesen Ventilkartuschen weist die Spindel bereichsweise einen Abschnitt mit vergrößertem Außendurchmesser auf, der mit einer Nut zur Aufnahme eines O-Rings zur Abdichtung gegenüber dem Kopfstück versehen ist. Es hat sich gezeigt, dass bei diesen Ventilkartuschen, insbesondere wenn sie größer dimensioniert sind, ein erhöhter Drehwiderstand der Spindel auftritt, wodurch die Spindelbetätigung als schwergängig empfunden wird.

Hier will die Erfindung Abhilfe schaffen. Der Erfindung liegt die Aufgabe zugrunde, eine Ventilkartusche der vorstehenden Art bereitzustellen, die einen verminderten Drehwiderstand aufweist. Gemäß der Erfindung wird diese Aufgabe durch eine Ventilkartusche mit den Merkmalen des kennzeichnenden Teils des Patentanspruchs 1 gelöst.

Mit der Erfindung ist eine Ventilkartusche bereitgestellt, die einen verminderten Drehwiderstand aufweist. Dadurch, dass in dem Kopfstück eine Reduzierhülse eingebracht ist, die über einen ersten O-Ring gegenüber dem Kopfstück abgedichtet ist, wobei die Spindel über einen zweiten O-Ring gegenüber der Reduzierhülse abgedichtet ist, ist der Drehwiderstand der Spindel vermindert.

Der Erfindung liegt die Erkenntnis zugrunde, dass der Drehwiderstand der Spindel proportional mit dem O-Ring Durchmesser ansteigt. Dies lässt sich damit erklären, dass der Reibwiderstand der Spindel gegenüber dem O-Ring mit zunehmendem Innendurchmesser zunimmt, da je Spindeldrehung eine größere Umfangsfläche an dem O-Ring entlang zu bewegen ist. Da die Spindel dichtend an dem kleineren Innendurchmesser des O-Rings anliegt, wohingegen der größere Durchmesser des O-Rings an dem Kopfstück dichtend anliegt, ist der Reibwiderstand zwischen Spindel und O-Ring geringer, als zwischen O-Ring und Kopfstück. Aufgrund des geringeren Reibwiderstandes dreht sich die Spindel immer gegenüber dem O-Ring, der seinerseits aufgrund des größeren Reibwiderstands gegenüber dem Kopfstück an diesem ortsfest verharrt. Dadurch, dass die Spindel erfindungsgemäß über einen ersten O-Ring gegenüber der in das Kopfstück eingebrachten Reduzierhülse abgedichtet ist, die wiederum über einen weiteren O-Ring gegenüber dem Kopfstück abgedichtet ist, ist der im Stand der Technik vorhandene Spindelabschnitt mit vergrößertem Außendurchmesser nicht mehr erforderlich, wodurch ein O-Ring mit geringerem Innendurchmesser eingesetzt werden kann. Hierdurch ist die Reibfläche vermindert, wodurch wiederum der Drehwiderstand der Spindel reduziert ist.

Erfindungsgemäß weist die Spindel eine axiale Durchbohrung zum Durchtritt von Wasser auf. Dabei ist die Spindel bevorzugt axial in dem Kopfstück verschiebbar. Hierdurch ist eine sehr kompakte Gestaltung der Ventilkartusche erzielbar, da diese insbesondere keine vielfachen Absätze zur axialen Fixierung der Spindel aufweist, wodurch ein minimierter Außendurchmesser des Kopfstücks ermöglicht ist. Zugleich kann der Innendurchmesser der Durchgangsbohrung für den Wasserdurchfluss maximiert werden. Die axiale Fixierung der Spindel einer so gestalteten Ventilkartusche kann im Zuge der Integration in die Durchgangsarmatur durch einen hierfür erforderlichen Anschlag erfolgen.

In Weiterbildung der Erfindung weist die Reduzierhülse auf ihrer dem Kopfstück zugewandten Außenseite eine Ringnut zur Aufnahme des ersten O-Rings auf. Hierdurch ist eine lagegerechte Positionierung des ersten O-Rings gewährleistet.

In Ausgestaltung der Erfindung weist die Reduzierhülse auf ihrer der Spindel zugewandten Innenseite eine Dichtfläche zur Anlage des zweiten O-Rings auf, die axial versetzt zur Ringnut, bevorzugt auf ihrer dem Ventil zugewandten Seite der Ringnut angeordnet ist. Hierdurch ist eine versetzte Anordnung der beiden O-Ringe zueinander erzielt, wodurch die Wandstärke der Reduzierhülse und damit ihre Stabilität erhöht ist. Alternativ kann die Dichtfläche auch parallel gegenüberliegend zur Ringnut angeordnet sein.

In weiterer Ausgestaltung der Erfindung ist die Dichtfläche durch einen innendurchmessererweiterten Abschnitt der Reduzierhülse gebildet. Hierdurch ist die Führung des bevorzugt in einer Ringnut der Spindel geführten zweiten O-Rings unterstützt.

In Weiterbildung der Erfindung weist die Reduzierhülse endseitig einen umlaufenden Kragen auf, mit dem sie auf dem Kopfstück aufliegt. Hierdurch ist eine axiale Positionierung der Reduzierhülse erzielt. Alternativ kann in der Reduzierhülse auch auf ihrer dem Kopfstück zugewandten Außenseite eine Nut zum Eingriff eines Nutenrings (auch als Sprengring oder Seegerring bezeichnet) zur axialen Fixierung eingebracht sein.

In weiterer Ausgestaltung der Erfindung weist die Spindel außerhalb des Kopfstücks einen Kopplungsabschnitt mit unrundem, bevorzugt polygonem Querschnitt auf. Hierdurch ist eine bauraumminimierte Kopplung mit einem Bedienteil innerhalb einer Ventilarmatur ermöglicht.

In Weiterbildung der Erfindung ist das Ventil durch eine Steuerscheibe und eine an dieser anliegenden, drehfest in dem Kopfstück gehaltenen Einlassscheibe gebildet. Dabei liegt das Ventil vorteilhaft über einen Dichtring dichtend an dem Absatz an.

In Ausgestaltung der Erfindung weist die Spindel endseitig wenigstens einen Mitnehmerzapfen auf, über den sie formschlüssig mit der Steuerscheibe verbunden ist. Hierdurch ist eine kompakte drehfeste Verbindung zwischen Spindel und Steuerscheibe erzielt.

Der Erfindung liegt weiterhin die Aufgabe zugrunde, eine Ventilarmatur bereitzustellen, deren Spindel einen verminderten Drehwiderstand aufweist. Gemäß der Erfindung wird diese Aufgabe durch eine Armatur mit den Merkmalen des Patentanspruchs 12 gelöst. Dadurch, dass in die Armatur eine Kartusche der vorstehenden Art eingebracht ist, wobei die Spindel mit ihrem freien Ende an einem in der Armatur angeordneten Anschlag anliegt, wodurch sie axial fixiert ist, ist eine sehr kompakte Ausführung des Armaturengehäuses ermöglicht. Bevorzugt ist ein Betätigungsteil angeordnet, das formschlüssig mit dem Kopplungsabschnitt verbunden ist. Dabei kann das Betätigungsteil durch einen verschwenkbaren Hebel oder einen elektromotorischen Antrieb gebildet sein.

In Weiterbildung der Erfindung sind ein Wasserzulaufanschluss und ein Wasserablaufanschluss angeordnet, die zueinander fluchten und zwischen denen die Ventilkartusche angeordnet ist. Hierdurch ist eine kompakte Bauweise der Armatur erzielt.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die schematische Darstellung einer Ventilkartusche
a) teilweise in Ansicht, teilweise im Axialschnitt;
b) in der Draufsicht
- Fig. 2: die Darstellung des Kopfstücks der Ventilkartusche aus Figur 1
a) teilweise in Ansicht, teilweise im Axialschnitt;
b) in der Draufsicht;

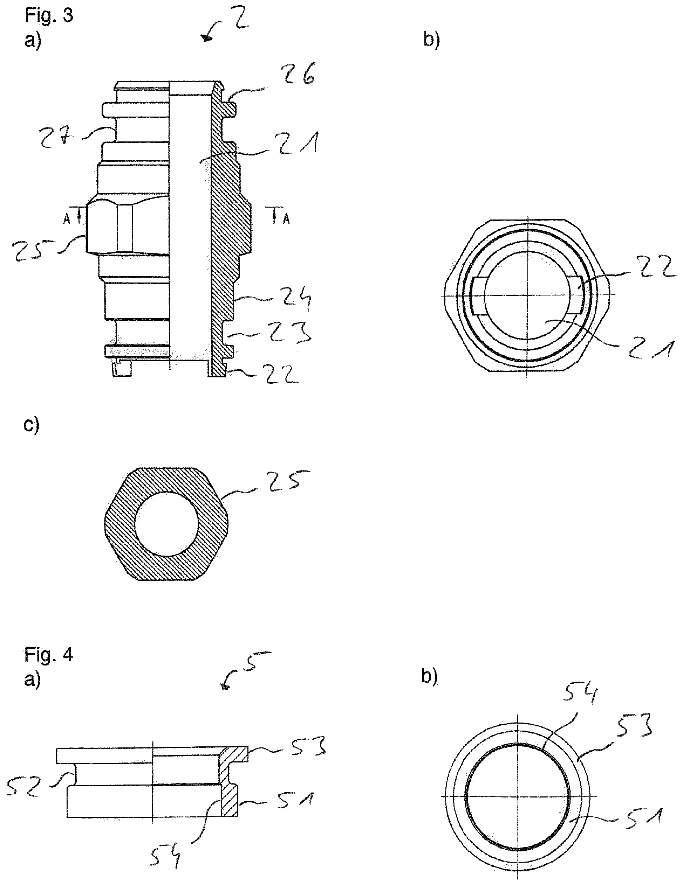

- Fig. 3: die Darstellung der Spindel der Ventilkartusche aus Figur 1
a) teilweise in Ansicht, teilweise im Axialschnitt;
b) in der Ansicht von unten;
c) in Schnittdarstellung A-A;
- Fig. 4: die Darstellung der Reduzierhülse der Ventilkartusche aus Figur 1
a) teilweise in Ansicht, teilweise im Axialschnitt;
b) in der Ansicht von unten;

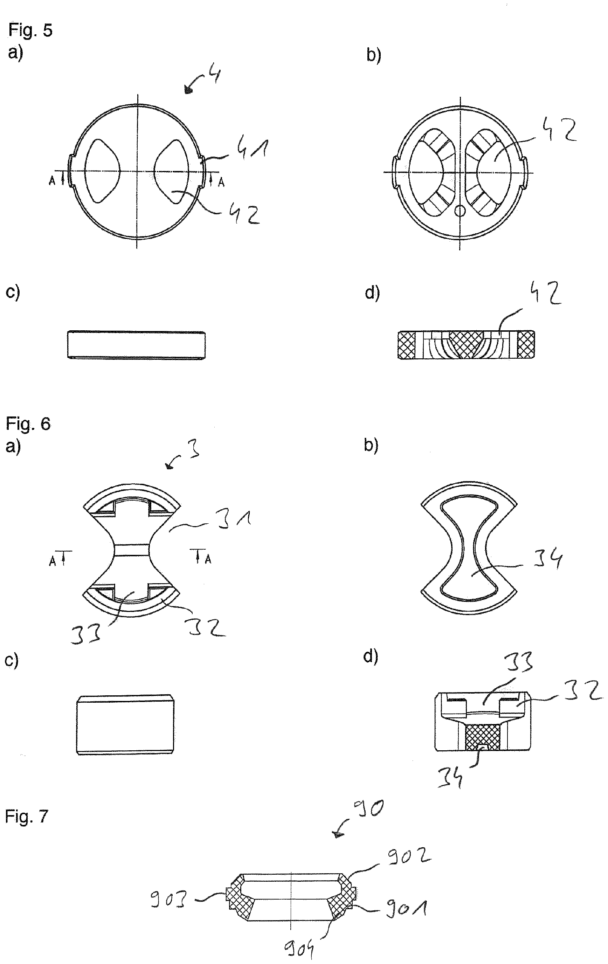

- Fig. 5: die Darstellung der Einlassscheibe der Ventilkartusche aus Figur 1
a) In der Draufsicht;
b) in der Ansicht von unten;
c) in der Seitenansicht;
d) im Schnitt A-B;
- Fig. 6: die Darstellung der Steuerscheibe der Ventilkartusche aus Figur 1
a) in der Draufsicht;
b) in der Ansicht von unten;
c) in der Seitenansicht;
d) im Schnitt A-A;
- Fig. 7: die Darstellung der Lippendichtung der Ventilkartusche aus Figur 1;
- Fig. 8: die schematische Darstellung einer Ventilkartusche in einer weiteren Ausführungsform, teilweise in Ansicht, teilweise im Axialschnitt;

- Fig. 9: die Darstellung des Kopfstücks der Ventilkartusche aus Figur 8
a) teilweise in Ansicht, teilweise im Axialschnitt;
b) in der Draufsicht;
- Fig. 10: die Darstellung der Spindel der Ventilkartusche aus Figur 8
a) teilweise in Ansicht, teilweise im Axialschnitt;
b) in der Ansicht von unten;
- Fig. 11: die Darstellung der Reduzierhülse der Ventilkartusche aus Figur 8
a) teilweise in Ansicht, teilweise im Axialschnitt;
b) in der Ansicht von unten;
- Fig. 12: die schematische Darstellung einer Durchgangsventilarmatur
a) im Längsschnitt;
b) im Schnitt A-A.

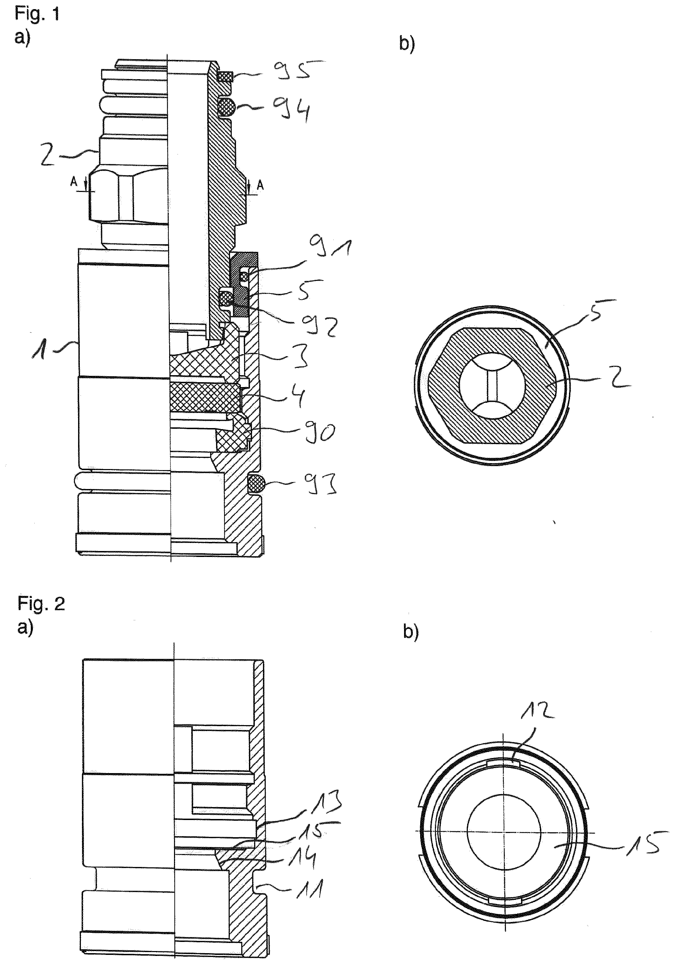

Die als Ausführungsbeispiel gewählte Ventilkartusche gemäß Figur 1 weist ein Kopfstück 1 auf, das von einer in ihm radial geführten Spindel 2 mittig durchsetzt ist. In das Kopfstück 1 ist eine Reduzierhülse 5 eingesetzt, die über einen ersten O-Ring 91 gegenüber dem Kopfstück 1 abgedichtet ist und in der die Spindel 2 geführt ist, die über einen zweiten O-Ring 92 gegenüber der Reduzierhülse 5 abgedichtet ist.

Über die Spindel 2 ist ein Ventil betätigbar, das an einem in dem Kopfstück 1 angeordneten Absatz 15, der durch einen innendurchmesserreduzierten Abschnitt 14 des Kopfstücks 1 gebildet ist, über eine Lippendichtung 90 zur Anlage kommt. Das Ventil ist im Ausführungsbeispiel von einer Steuerscheibe 3 und einer Einlassscheibe 4 gebildet. Die Steuerscheibe 3 ist mit der Spindel 2 formschlüssig verbunden und in dem Kopfstück 1 radial geführt. An ihrer der Spindel 2 abgewandten Seite der Steuerscheibe 3 ist die Einlassscheibe 4 in dem Kopfstück 1 angeordnet, an die sich die Lippendichtung 90 anschließt, die an dem Absatz 15 des Kopfstücks 1 zur Anlage kommt. Die Steuerscheibe 3 liegt dichtend auf der Einlassscheibe 4 auf. Im Ausführungsbeispiel sind die Steuerscheibe 3 und die Einlassscheibe 4 als Keramikscheiben ausgebildet.

Das Kopfstück 1 ist im Ausführungsbeispiel als Messingdrehteil ausgebildet und besteht aus einem zylinderförmigen Hohlkörper, in dessen Außenmantelfläche eine Nut 11 zur Aufnahme eines O-Rings 93 eingebracht ist. In Höhe der Nut 11 ist innen der innendurchmesserreduzierte Abschnitt 14 mit sich in Richtung der Lippendichtung 90 konisch verengendem Innendurchmesser angeordnet, der eine ringförmige Fläche aufweist, die den Absatz 15 ausbildet. Beabstandet zu dem Absatz 15 ist in die Innenmantelfläche des Kopfstücks eine Nut 13 zur Aufnahme der Lippendichtung 90 eingebracht. Darüber hinaus sind innen diametral gegenüberliegend zwei Axialnuten 12 angeordnet, die sich von seinem dem Absatz 16 abgewandten Ende des Kopfstücks 1 bis zu der Nut 13 erstrecken. Die Axialnuten 12 nehmen die Nasen 41 der Einlassscheibe 4 auf, wodurch diese drehfest in dem Kopfstück 1 gehalten ist.

Die Spindel 2 ist als im Wesentlichen zylindrisches Messingdrehteil ausgeführt und weist zentrisch eine axiale Durchbohrung 21 für den Wasserdurchtritt auf. Endseitig sind an die Spindel diametral gegenüberliegend zwei Mitnehmerzapfen 22 zur formschlüssigen Verbindung mit der Steuerscheibe 3 angeordnet. An die Mitnehmerzapfen 22 schließt sich eine Dichtungsnut 23 zur Aufnahme des zweiten O-Rings 92 an. Über den zweiten O-Ring 92 ist die Spindel 21 gegenüber der Reduzierhülse 5 abgedichtet. An die Dichtungsnut 23 schließt sich ein zylindrischer Abschnitt 24 an, über den die Spindel 1 in der Reduzierhülse 5 geführt ist. Etwa mittig ist an die Außenmantelfläche der Spindel 2 umlaufend ein Kopplungsabschnitt 25 angeformt, der in Form eines unregelmäßigen Sechskants ausgebildet ist. Auf ihrer den Mitnehmerzapfen 22 gegenüberliegenden Stirnseite ist ein umlaufender Ringsteg 26 angeordnet, der eine Dichtscheibe 95 aufnimmt. Beabstandet zu dem Ringsteg 26 ist in die Spindel eine Dichtungsnut 27 zur Aufnahme eines weiteren O-Rings 94 eingebracht. Die Spindel 2 ist in dem Kopfstück 1 über die Reduzierhülse 5 drehbar, jedoch axial verschiebbar angeordnet.

Die Steuerscheibe 3 hat eine im Wesentlichen tonnenförmige Ausbildung, aus der zwei sich gegenüberliegende Kreisausschnitte 31 ausgenommen sind. Die Kreisausschnitte 31 weisen im Ausführungsbeispiel einen Winkel von ca. 90° auf. Auf ihrer der Spindel 2 zugewandten Seite weist die Steuerscheibe 3 einen ringförmigen Ansatz 32 auf. Der ringförmige Ansatz 32 umfasst in montiertem Zustand die Mitnehmerzapfen 22 der Spindel 2. Am Fuß des Ansatzes 32 sind Ausnehmungen 33 ausgebildet, in die jeweils ein Mitnehmerzapfen 22 fasst. Auf ihrer der Spindel 2 abgewandten Stirnseite ist in der Steuerscheibe 3 eine Vertiefung 34 eingebracht.

Die Einlassscheibe 4 ist im Wesentlichen zylinderförmig ausgebildet und weist auf ihrem Umfang zwei diametral gegenüberliegend angeordnete Nasen 41 auf. Mit den Nasen 41 fasst die Einlassscheibe 4 in die Axialnuten 12, die hierzu innen in dem Kopfstücks 1 angeordnet sind, wodurch die Einlassscheibe 4 in dem Kopfstück 1 drehfest gehalten ist. Die Einlassscheibe 4 liegt auf der Lippe 902 der Lippendichtung 90 auf und weist sektorförmige Durchtrittsöffnungen 42 auf. Im Ausführungsbeispiel sind zwei sich diametral gegenüberliegende Durchtrittsöffnungen 42 angeordnet.

Die Lippendichtung 90 ist im Ausführungsbeispiel aus Gummi ausgebildet und umfasst ein Ringstück 901, an dem auf seiner der Einlassscheibe 4 zugewandten Stirnseite eine Lippe 902 angeformt ist. Die Lippe 902 hat im Querschnitt eine im Wesentlichen trapezförmige Ausbildung. Die Lippe 902 ist unter einem Winkel zur Horizontalen angeordnet. Die Außenfläche der Lippe 902 liegt an der Einlassscheibe 4 dichtend an. Das Ringstück 901 ist außen mit einem Bund 903 versehen, der in die Nut 13 des Kopfstücks 1 eingreift. Innen ist an dem Ringstück 901 eine Wulst 904 ausgebildet. Die Außenseite der Wulst 904 liegt plan auf dem Absatz 15 des innendurchmesserreduzierten Abschnitts 14 auf.

Die Reduzierhülse 5 ist als im Wesentlichen hohlzylindrisches Messingteil ausgebildet und weist an seinem der Steuerscheibe 3 zugewandten Ende einen zylindrischen Abschnitt 51 auf, an den sich eine Ringnut 52 zur Aufnahme des ersten O-Rings 91 anschließt, die auf ihrer dem zylindrischen Abschnitt 51 gegenüberliegenden Seiten von einem umlaufenden Kragen 53 begrenzt ist, der den zylindrischen Abschnitt 51 radial überragt und mit dem die Reduzierhülse 5 auf dem Kopfstück 1 aufliegt. Innen ist in die Reduzierhülse im Bereich des zylindrischen Abschnitts 51 ein innendurchmessererweiterter Abschnitt 54 angeordnet, der die Dichtfläche für den zweiten O-Ring 92 bildet, über den die Spindel 2 gegenüber der Reduzierhülse 5 abgedichtet ist.

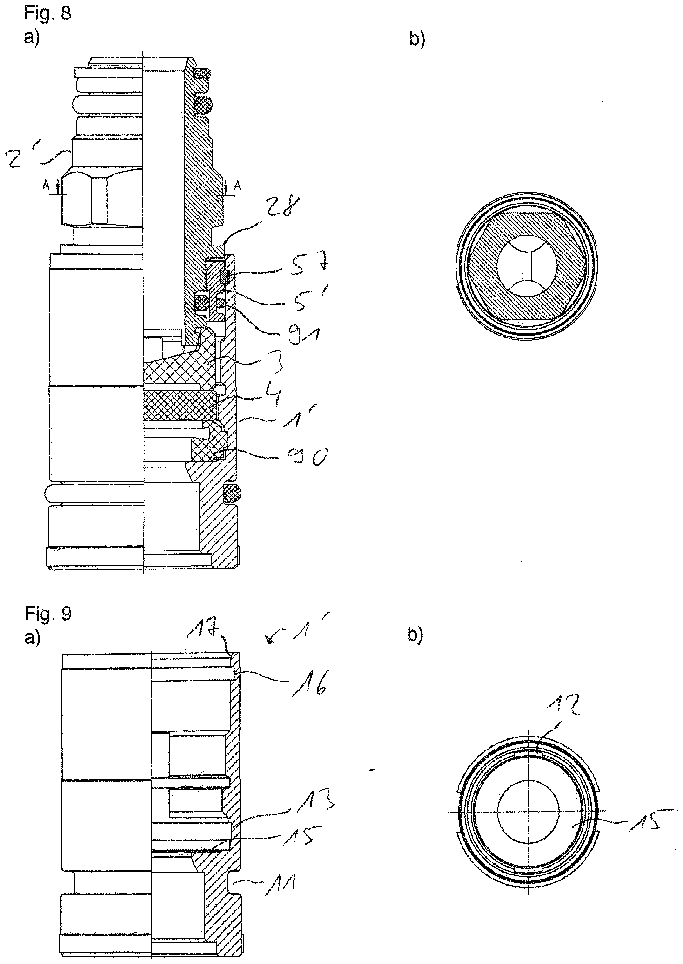

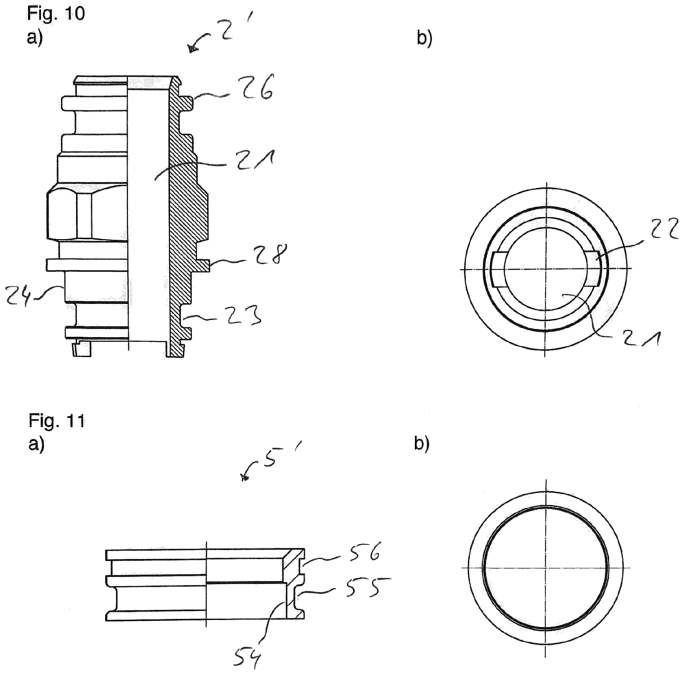

In Figur 8 ist eine Ventilkartusche in einer weiteren Ausführungsform dargestellt. Bei dieser Ventilkartusche ist eine Reduzierhülse 5' mit modifizierter Au-ßenkontur angeordnet, die vollständig in das Kopfstück 1' eingesetzt ist. Die modifizierte Reduzierhülse 5' ist in Figur 11 dargestellt. Die Innenkontur dieser Reduzierhülse 5' ist unverändert und weist einen innendurchmessererweiterten Abschnitt 54 auf, der eine Dichtfläche für den zweiten O-Ring 92 ausbildet, über den die Spindel 2 gegenüber der Reduzierhülse 5' abgedichtet ist. Außen ist in die Reduzierhülse 5' im Bereich des innendurchmessererweiterten Abschnitts 54 eine Ringnut 55 zur Aufnahme des ersten O-Rings 91 eingebracht. Dier erste O-Ring 91 ist somit auf gleicher Höhe mit dem zweiten O-Ring 92 angeordnet. Beabstandet zu der Ringnut 55 ist eine Nut 56 zur Aufnahme eines Nutenrings 57 eingebracht, über den die Reduzierhülse 5' in dem Kopfstück 1' axial gehalten ist. Hierzu ist in dem Kopfstück 1' eine Nut 16 eingebracht, in die der Nutenring 57 eingreift. Ansonsten ist das Kopfstück 1' - abgesehen von einer an seinem der Spindel 2' zugewandten Seite innen eingebrachte umlaufende Fase 17 - unverändert. Die Spindel 2' ist in diesem Ausführungsbeispiel weitgehend unverändert ausgebildet. Sie weist lediglich an der dem Kopplungsabschnitt 25 zugewandten Seite des zylindrischen Abschnitts 24 zusätzlich einen umlaufenden Kragen 28 auf, der in die Fase 17 des Kopfstücks hineinragt.

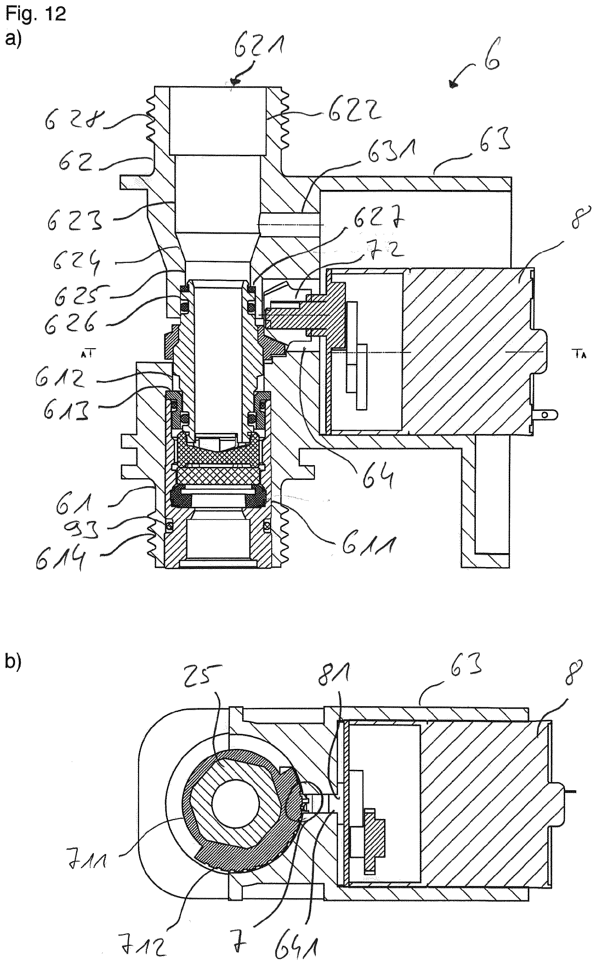

In Figur 12 ist ein Armaturengehäuse 6 dargestellt, in das eine erfindungsgemäße Ventilkartusche gemäß Figur 1 eingesetzt ist. Das Armaturengehäuse 6 umfasst einen Wasserzulaufabschnitt 61 und einen Wasserauslaufabschnitt 62, durch die ein Wasserzulaufkanal geführt ist, sowie einen Antriebsabschnitt 63.

Der Wasserzulaufabschnitt 61 weist als Teil des Wasserzulaufkanals eine zylinderförmige Kartuschenaufnahme 611 auf, die durch einen innendurchmesserreduzierten Abschnitt 612 begrenzt ist, durch den ein Anschlag 613 gebildet ist.

Endseitig weist der Wasserzulaufabschnitt 61 außen ein Außengewinde 614 zum Anschluss einer Wasserzulaufleitung auf.

Der Wasserablaufabschnitt 62 umfasst als Teil des Wasserzulaufkanals eine Stufenbohrung 621, die einen ersten zylindrischen Abschnitt 622 aufweist, an den sich ein zweiter zylindrischer, innendurchmesserreduzierter Abschnitt 623 anschließt, der in einen konisch zulaufenden Abschnitt 624 übergeht, der in einen dritten zylindrischen Abschnitt 625 mündet, an den sich ein vierter zylindrischer, durchmessererweiterter Abschnitt 626 anschließt, durch den eine ringförmige Anlagefläche 627 gebildet ist. Endseitig weist der Wasserablaufabschnitt 62 außen ein Außengewinde 628 zum Anschluss einer Wasserablaufleitung auf.

Der Antriebsabschnitt 63 ist im Wesentlichen zylindrisch ausgebildet und mündet in einen Getrieberaum 64, der einen Durchgang 641 aufweist, der zwischen dem Wasserzulaufabschnitt 61 und dem Wasserablaufabschnitt 62 mündet. Weiterhin ist in dem Antriebsabschnitt 63 eine Messbohrung 631 angeordnet, die in dem zweiten Abschnitt 623 der Stufenbohrung 621 mündet.

Die Ventilkartusche ist in die Kartuschenaufnahme 611 eingebracht, wobei das Kopfstück 1 über den Kragen 53 der Reduzierhülse 5 an dem Anschlag 613 anliegt. Die Reduzierhülse 5 ist so zwischen dem Kopfstück 1 und dem Anschlag 613 axial fixiert. Das Kopfstück 1 ist über den O-Ring 93 gegenüber der Kartuschenaufnahme 611 abgedichtet. Die Spindel 2 der Ventilkartusche ragt durch den innendurchmesserreduzierten Abschnitt 612 hindurch. Auf dem Kopplungsabschnitt 25 ist ein Kegelrad 71 eines Kegelradgetriebes 7 aufgebracht, das im Ausführungsbeispiel aus einem hohlzylinderförmigen Ringteil 711 gebildet ist, an dem außen ein Kegelradsegment 712 angeordnet ist.

Das Kegelradsegment 712 umspannt einen Winkel von 110° des Ringteils 711. Je nach maximalem gewünschten Drehwinkel der Spindel 2 kann das Kegelradsegment 712 auch einen geringeren oder einen größeren Winkel des Ringteils 711 umspannen. Das Ringteil 711 weist eine Innenkontur eines unregelmäßigen Sechskants auf, die mit der Außenkontur des Kopplungsabschnitts 25 korrespondiert, auf der es angeordnet ist. Das Kegelrad 71 ist so formschlüssig mit der Spindel verbunden, wobei das Kegelrad 71 mit seinem Kegelradsegment 712 in den Durchgang 641 hineinragt.

Kopfseitig liegt die Spindel 2 an der Anlagefläche 627 des Wasserablaufabschnitts 62 an, gegen die sie über die Dichtscheibe 95 abgedichtet ist. Radial ist die Spindel 2 gegenüber dem vierten zylindrischen Abschnitt 626 der Stufenbohrung 621 über den in der Dichtungsnut 27 angeordneten O-Ring 94 abgedichtet.

In dem Antriebsabschnitt 63 ist ein Elektromotor 8 angeordnet, dessen Antriebswelle 81 in den Getrieberaum 64 hineinragt. Auf die Antriebswelle 81 ist ein Kegelritzel 72 aufgebracht, das mit dem Kegelradsegment 712 des Kegelrades 71 im Eingriff ist. Zur Regelung des durch den Wasserablaufabschnitt 62 fließenden Wasserstroms ist eine - nicht dargestellte - Steuer- und Regeleinrichtung angeordnet, die mit einem in die Messbohrung 631 eingebrachten Sensor, vorzugsweise einem Strömungs- und/oder Temperatursensor verbunden ist und über die der Elektromotor 8 ansteuerbar ist.

## Patentansprüche

1. Ventilkartusche, mit einem Kopfstück (1, 1'), das von einer Spindel (2, 2') mittig durchsetzt ist, durch die ein Ventil betätigbar ist, das an einem durch eine Innendurchmesserreduzierung des Kopfstücks (1, 1') gebildeten Absatz (15) anliegt, wobei die Spindel (2, 2') über wenigstens einen O-Ring gegenüber dem Kopfstück abgedichtet ist, wobei in dem Kopfstück (1) eine Reduzierhülse (5, 5') eingebracht ist, die über einen ersten O-Ring (91) gegenüber dem Kopfstück (1, 1') abgedichtet ist, wobei die Spindel (2, 2') über einen zweiten O-Ring (92) gegenüber der Reduzierhülse (5, 5') abgedichtet ist, **dadurch gekennzeichnet, dass** die Spindel (2, 2') eine axiale Durchbohrung (21) zum Durchtritt von Wasser aufweist.

2. Ventilkartusche nach Anspruch 1, **dadurch gekennzeichnet, dass** die Reduzierhülse (5, 5') auf ihrer dem Kopfstück (1, 1 ') zugewandten Außenseite eine Ringnut (52, 55) zur Aufnahme des ersten O-Rings (91) aufweist.

3. Ventilkartusche nach Anspruch 2, **dadurch gekennzeichnet, dass** die Reduzierhülse (5, 5') auf ihrer der Spindel (2, 2') zugewandten Innenseite eine Dichtfläche zur Anlage des zweiten O-Rings (92) aufweist, die parallel gegenüberliegend oder axial versetzt zur Ringnut (52, 55), bevorzugt auf ihrer dem Ventil zugewandten Seite der Ringnut angeordnet ist.

4. Ventilkartusche nach Anspruch 3, **dadurch gekennzeichnet, dass** die Dichtfläche durch einen innendurchmessererweiterten Abschnitt (54) der Reduzierhülse (5, 5') gebildet ist.

5. Ventilkartusche nach einem der vorgenannten Ansprüche, **dadurch gekennzeichnet, dass** die Reduzierhülse (5, 5') endseitig einen umlaufenden Kragen (53) aufweist, mit dem sie auf dem Kopfstück (1) aufliegt oder dass in ihrer Außenmantelfläche eine Nut (56) zum Eingriff eines Nutenrings (57) eingebracht ist.

6. Ventilkartusche nach einem der vorgenannten Ansprüche, **dadurch gekennzeichnet, dass** die Spindel (2, 2') axial in dem Kopfstück verschiebbar ist.

7. Ventilkartusche nach Anspruch 6, **dadurch gekennzeichnet, dass** die Spindel (2, 2') außerhalb des Kopfstücks einen Kopplungsabschnitt (25) mit unrundem, bevorzugt polygonem Querschnitt aufweist.

8. Ventilkartusche nach einem der vorgenannten Ansprüche, **dadurch gekennzeichnet, dass** das Ventil durch eine Steuerscheibe (3) und eine an dieser anliegenden, drehfest in dem Kopfstück (1, 1') gehaltenen Einlassscheibe (4) gebildet ist.

9. Ventilkartusche nach einem der vorgenannten Ansprüche, **dadurch gekennzeichnet, dass** das Ventil über einen Dichtring dichtend an dem Absatz anliegt.

10. Ventilkartusche nach Anspruch 8 oder 9, **dadurch gekennzeichnet, dass** die Spindel (2, 2') endseitig einen Mitnehmerzapfen (22) aufweist, über den sie formschlüssig mit der Steuerscheibe (3) verbunden ist.

11. Armatur, insbesondere Sanitärarmatur, mit einem Wasserdurchlaufkanal, in den eine Ventilkartusche nach einem der Ansprüche 6 bis 10 eingebracht ist, wobei die Spindel (2, 2') mit ihrem freien Ende an einem in dem Armaturengehäuse (6) der Armatur angeordneten Anschlag (613) anliegt.

12. Armatur nach Anspruch 11, **dadurch gekennzeichnet, dass** ein Betätigungsteil angeordnet ist, das formschlüssig mit dem hierzu unrund ausgeführtem Kopplungsabschnitt (25) verbunden ist, wobei das Betätigungsteil einen verschwenkbaren Hebel oder einen motorischen Antrieb, insbesondere einen Elektromotor (8) umfasst.

13. Armatur nach Anspruch 11 oder 12, **dadurch gekennzeichnet, dass** ein Wasserzulaufanschluss und ein Wasserablaufanschluss angeordnet sind, die zueinander fluchten und zwischen denen die Ventilkartusche angeordnet ist.

## Claims

1. Valve cartridge having a head piece (1, 1') centrally penetrated by a spindle (2, 2'), by means of which a valve can be actuated, which rests against a shoulder (15) formed by an inner diameter reduction of the head piece (1, 1'), wherein the spindle (2, 2') is sealed with respect to the head piece via at least one O-ring, wherein a reducing sleeve (5, 5') is introduced into the head piece (1), which is sealed with respect to the head piece (1, 1') via a first O-ring (91), wherein the spindle (2, 2') is sealed with respect to the reducing sleeve (5, 5') via a second O-ring (92), **characterised in that** the spindle (2, 2') has an axial through-bore (21) for the passage of water.

2. Valve cartridge according to claim 1, **characterised in that** the reducing sleeve (5, 5') has an annular groove (52, 55) for receiving the first O-ring (91) on its outer side facing the head piece (1, 1').

3. Valve cartridge according to claim 2, **characterised in that** the reducing sleeve (5, 5') has on its inner side facing the spindle (2, 2') a sealing surface for abutment of the second O-ring (92), which is arranged parallel opposite or axially offset to the annular groove (52, 55), preferably on its side of the annular groove facing the valve.

4. Valve cartridge according to claim 3, **characterised in that** the sealing surface is formed by a section (54) of the reducing sleeve (5, 5') of enlarged inner diameter.

5. Valve cartridge according to one of the previous claims, **characterised in that** the reducing sleeve (5, 5') has a circumferential collar (53) at the end, with which it rests on the head piece (1) or **in that** a groove (56) for engagement of a groove ring (57) is introduced into its outer surface.

6. Valve cartridge according to one of the previous claims, **characterised in that** the spindle (2, 2') is axially displaceable in the head piece.

7. Valve cartridge according to claim 6, **characterised in that** the spindle (2, 2') has a coupling portion (25) outside the head piece with a non-circular, preferably polygonal cross-section.

8. Valve cartridge according to one of the previous claims, **characterised in that** the valve is formed by a control disc (3) and an inlet disc (4) which rests thereon and is non-rotatably held in the head piece (1, 1').

9. Valve cartridge according to one of the previous claims, **characterised in that** the valve rests against the shoulder in a sealing manner via a sealing ring.

10. Valve cartridge according to claim 8 or 9, **characterised in that** the spindle (2, 2') has a driver pin (22) at the end, via which it is connected to the control disc (3) in a form-fitting manner.

11. Fitting, in particular sanitary fitting, with a water flow channel, into which a valve cartridge according to one of claims 6 to 10 is introduced, wherein the spindle (2, 2') rests with its free end against a stop (613) arranged in the fitting housing (6) of the fitting.

12. Fitting according to claim 11, **characterised in that** an actuating part is arranged, which is positively connected to the coupling portion (25) designed in a non-circular manner for this purpose, wherein the actuating part comprises a pivotable lever or a motor drive, in particular an electric motor (8).

13. Fitting according to claim 11 or 12, **characterised in that** a water inlet connection and a water outlet connection are arranged, which are aligned with one another and between which the valve cartridge is arranged.

## Revendications

1. Cartouche de vanne, comprenant une pièce têtière (1, 1') traversée en son centre par une broche (2, 2'), broche par laquelle est actionnable une vanne qui applique contre un épaulement (15) formé par une réduction du diamètre intérieur de la pièce têtière (1, 1'), sachant que la broche (2, 2') est étanchée via au moins un joint torique par rapport à la pièce têtière, sachant que dans la pièce têtière (1) est introduite une douille réductrice (5, 5') étanchée par rapport à la pièce têtière (1, 1') via un premier joint torique (91), sachant que la broche (2, 2') est étanchée par rapport à la douille réductrice (5, 5') via un deuxième joint torique (92), **caractérisée en ce que** la broche (2, 2') présente un alésage axial traversant (21) servant au passage de l'eau.

2. Cartouche de vanne selon la revendication 1, **caractérisée en ce que** la douille réductrice (5, 5') présente, sur son côté extérieur regardant la pièce têtière (1, 1'), une gorge annulaire (52, 55) servant à recevoir le premier joint torique (91).

3. Cartouche de vanne selon la revendication 2, **caractérisée en ce que** la douille réductrice (5, 5') présente, sur son côté intérieur regardant la broche (2, 2'), une surface d'étanchéité servant à l'applique du deuxième joint torique (92), qui est disposée parallèlement ou décalée axialement par rapport à la gorge annulaire (52, 55), de préférence sur le côté de la gorge annulaire regardant la vanne.

4. Cartouche de vanne selon la revendication 3, **caractérisée en ce que** la surface d'étanchéité est formée par un segment (54) - présentant un diamètre intérieur élargi - de la douille réductrice (5, 5').

5. Cartouche de vanne selon l'une des revendications précédentes, **caractérisée en ce que** la douille réductrice (5, 5') présente à son extrémité un collet périphérique (53) par lequel elle applique sur la pièce têtière (1), ou **en ce que** dans sa surface enveloppante extérieure a été ménagée une gorge (56) pour qu'engrène une bague de gorge (57).

6. Cartouche de vanne selon l'une des revendications précédentes, **caractérisée en ce que** la broche (2, 2') est déplaçable axialement dans la pièce têtière.

7. Cartouche de vanne selon la revendication 6, **caractérisée en ce que** la broche (2, 2') présente, hors de la pièce têtière, un segment de couplage (25) dont la section est non ronde, mais de préférence polygonale.

8. Cartouche de vanne selon l'une des revendications précédentes, **caractérisée en ce que** la vanne est formée par un disque de commande (3) et un disque d'admission (4), appliquant contre le disque premier cité, et retenu dans la pièce têtière (1, 1') sans pouvoir tourner.

9. Cartouche de vanne selon l'une des revendications précédentes, **caractérisée en ce que** la vanne applique via une bague d'étanchéité - de manière à étancher - contre l'épaulement.

10. Cartouche de vanne selon la revendication 8 ou 9, **caractérisée en ce que** la broche (2, 2') présente à son extrémité un taquet entraîneur (22) via lequel elle est reliée par adhérence de formes avec le disque de commande (3).

11. Robinetterie, en particulier robinetterie sanitaire, comprenant un conduit de passage de l'eau dans lequel est introduite une cartouche de vanne selon l'une des revendications 6 à 10, sachant que la broche (2, 2') applique par son extrémité libre contre une butée (613) disposée dans le boîtier (6) de la robinetterie.

12. Robinetterie selon la revendication 11, **caractérisée en ce qu'**est disposée une pièce d'actionnement reliée par adhérence de formes avec le segment de couplage (25) réalisé non rond à cette fin, sachant que la pièce d'actionnement comprend un levier pivotant ou un entraînement motorisé, en particulier un moteur électrique (8).

13. Robinetterie selon la revendication 11 ou 12, **caractérisée en ce que** sont disposés un raccord d'arrivée d'eau et un raccord d'évacuation d'eau réciproquement alignés, et que la cartouche de vanne est disposée entre eux.
